# EUROPEAN PATENT SPECIFICATION

(11) **EP 2 273 582 B1**
(45) Date of publication and mention of the grant of the patent: **19.10.2016**
(21) Application number: 10380089.2
(22) Date of filing: 06.07.2010
(51) Int. Cl.: H01M 2/10, B60L 11/18, H01M 10/625, H01M 10/6563, H01M 10/6551, H01M 10/643, H01M 10/617, H01M 10/6566, H01M 10/613

(54) **Electrical power-supply unit for the propulsion of automobiles**
Stromversorgungseinheit für Antrieb von Automobilen
Unité d'alimentation électrique pour la propulsion d'automobiles

(30) Priority: 07.07.2009 ES 200930247 U
(43) Date of publication of application: 12.01.2011
(73) Proprietor: Seat, S.A., 08760 Martorell (ES)
(72) Inventor: Castella Daga, Santiago, 08760 Martorell Barcelona (ES); Cortercero Montanes, Rafael Luis, 08760 Martorell Barcelona (ES)
(74) Representative: Isern-Jara, Nuria

(56) References cited:
- WO-A1-2007/027020
- WO-A2-2006/099602
- US-A1- 2002 102 454

## Description

### Field of the Invention

The present invention relates to an electrical power-supply unit for the propulsion of automobiles, constituted by a set of batteries which are laterally attached to one another, forming a compact stack provided with cooling means.

The object of the invention is achieving a uniform cooling of the batteries which form the stack, within very tight margins, so that there is a correct operation of the electrical unit, in its power-supply function for automobile propulsion.

### Background of the Invention

From the analysis of the state of the art it is observed that there exists an innate problem in the use of large groups of batteries, namely heat generation, which is very damaging for the life of battery cells.

Since the temperature range within which the cells work is small, it is important that their cooling is homogeneous and constant. In this way, it is possible that all the cells work alike, with the same performance, and with the same capabilities as regards power and capacity.

In most current cooling systems for groups of batteries, the air flow runs from the outside to the inside of said group, finally going out again to the outside, so the cooling air flow generally travels a long way and at the final stage the air is already at a very high temperature, without even being useful as cooling means for the batteries which are at the end of the air flow path.

This circumstance prevents the homogenization of the temperature in the whole group of battery cells stacked in several rows, with the subsequent problem described above. This produces an uneven wear of the batteries, which entails a premature replacement thereof and thus an increase in the cost of the electrical power-supply unit.

Another inconvenience is the lack of space in the vehicles for the storage of this type of batteries, because with the traditional cooling system a blower set is required located outside the set of batteries and thus requiring more space.

Document WO 2006/099602 discloses an electrical power-supply unit with cooling means comprising a distribution chamber attached to the battery stack, and which has a cooling air inlet and a series of outlets, each of them connected to a corresponding air supply conduit leading towards the interior of the stack.

### Description of the Invention

The object of the present invention is to solve the problems indicated above, by means of an electrical power-supply unit according to claim 1 constituted in such a way that the set of batteries constituting it can be efficiently cooled, in a uniform way and with an organization and distribution of the batteries that enables to reduce the space that they occupy.

The electrical power-supply unit of the invention is constituted in such a way that the cooling means include a piece of equipment that injects cooling air to the interior of the stack of batteries, from where it flows towards the exterior of said stack, previously passing through the exterior of all batteries.

The aforementioned injection equipment comprises a distribution chamber, located outside the stack of batteries, attached thereto, which has a cooling air inlet and a series of outlets for said air, from the ends of which there come out other air supply conduits leading towards the center of the stacking center. The set of batteries constituting the electrical power-supply unit is enclosed in an external casing, between which and the stack of batteries there is an intermediate perforated wall that surrounds said stack. A hot air collecting chamber is delimited between this perforated wall and the external casing wall, said chamber leading into the exterior through an outlet provided in said external casing.

The supply conduits will have perforated walls, in such a way that they provide a cooling air distribution which circulates among all the batteries forming the electrical power-supply unit.

Preferably the air supply conduits will be closed in their outlet section by means of a wall having outlet orifices, orifices which will have a greater diameter than that of the orifices on the wall of said conduits.

The aforementioned distribution chamber is externally attached to the casing surrounding the set of batteries, being the wall of said casing crossed by the air supply conduits.

In this way, the supply of cooling cold air, from the aforementioned distribution chamber, takes place through the supply conduits, each one of them having a plurality of orifices, through which the cold air will be transported to the interior of the set of batteries, from where it will go out towards the exterior, to be finally collected by the hot air collecting chamber, from where it will be evacuated to the exterior.

With the described arrangement the cooling air follows two paths, one corresponding to the cold air and the other one to the hot air.

The cold air path is the following:
The air is sucked from the interior of the vehicle passenger compartment, at a generally low temperature, and, by means of a conventional electric blower, it is pushed towards the distribution chamber, through the inlet thereof. The blower may be placed at the entrance of the distribution chamber, from where the air is pushed and distributed through the different perforated wall conduits, thus guaranteeing the passage of cooling air around all the batteries comprising the electrical power-supply unit.

The hot air path is the following:
The cooling air flows from different points of the center of the set of batteries towards the exterior, making the air pass over the external surface of all the batteries, producing the cooling thereof. This air works as a heat energy transporter or vehicle, drawing the heat produced in the battery cells. Finally, it goes out through the orifices of the intermediate perforated wall, reaching the collecting chamber delimited between said intermediate perforated wall and the external casing of the electrical power-supply unit, from where it is evacuated to the exterior through a hot air outlet.

With this arrangement, the cooling air travels a short distance, between the central area of the set of batteries and the exterior thereof, which allows a high cooling effect on the cells of the set of batteries.

The number, size and position of the perforations of the cold air conduits will allow directing the air in the most suitable way, for uniformly cooling all battery cells, as well as for evacuating the hot air.

On the other hand, due to the special arrangement between the set of batteries and the cooling means, including the blower, an important reduction of the space occupied by the entire electrical power-supply unit is achieved.

According to another aspect of the invention the casing containing the set of batteries has on its exterior, at least on part of its walls, cooling fins which will run in a direction parallel to the longitudinal axis of the vehicle, in such a way that an air current of ambient air is produced between said fins by the movement of said vehicle. In order to increase this air current, at the front of the casing there is a frontal air distributor comprising an air collecting chamber, downwardly protruding from the vehicle floor and which is open on the surface directed towards the vehicle running direction, and an air supply chamber placed in front of the fins, which is connected to the collecting chamber and open on the wall directed towards said fins.

At the frontal air distributor, the current will enter through the opening of the collecting chamber, said air current being produced by the effect of the vehicle movement, and this current will reach the air supply chamber and will go out through the openings, directed towards the cooling fins.

The casing may be placed behind the bedplate of the rear seat, with the bases and vertical walls directed in a direction parallel to the longitudinal axis of the vehicle. The vertical walls and the lower base may have cooling fins.

According to an embodiment, the frontal air distributor is constituted by a preferably square or rectangular piping describing a C-shaped path, with straight sections. The central section of this piping runs horizontally under the vehicle floor and is open on the wall directed towards the running direction of said vehicle, constituting the air collecting chamber, into which the air current produced as a consequence of the vehicle movement will penetrate through its front opening. As regards the lateral sections of the C-shaped piping, they run in front of the cooling fins of the vertical walls and are open on the wall facing said fins, constituting other supply chambers.

The cooling fins of the casing lower base may be placed between the bottom of the vehicle and the central section of the C-shaped piping, or they may even be placed under said central section, in such a way that in any case they directly receive the air current produced by the effect of the vehicle movement.

### Brief Description of the Drawings

In the attached drawings it is presented an electrical power-supply unit, for the propulsion of automobiles, constituted according to the invention, provided as a nonlimiting example thereof, where:
Figure 1 a perspective view of the electrical power-supply unit, with the casing wall partially suppressed, to show the internal arrangement of the set of batteries and cooling means.
Figure 2 is a perspective view similar to Figure 1, in which the casing of the electrical power-supply unit has been suppressed.
Figure 3 is a perspective view similar to Figure 2, from an opposite angle and without the intermediate perforated wall.
Figure 4 is a sectional view of the electrical power-supply unit, taken according to the cutting line IV-IV of Figure 1.
Figure 5 shows a perspective view of the cooling means of the electrical power-supply unit of the invention.
Figure 6 is a perspective view of the power-supply unit, from the side opposite to that of Figure 1.
Figure 7 is a perspective view similar to Figure 6, showing the frontal air distributor.
Figure 8 is a rear perspective view of the air distributor.
Figure 9 corresponds to section IX-IX of Figure 2, at a greater scale.

### Detailed Description of a Preferred Embodiment

The constitution and advantages of the electrical power-supply unit of the invention will be understood better with the following description, referring to the embodiment example shown in the aforementioned drawings.

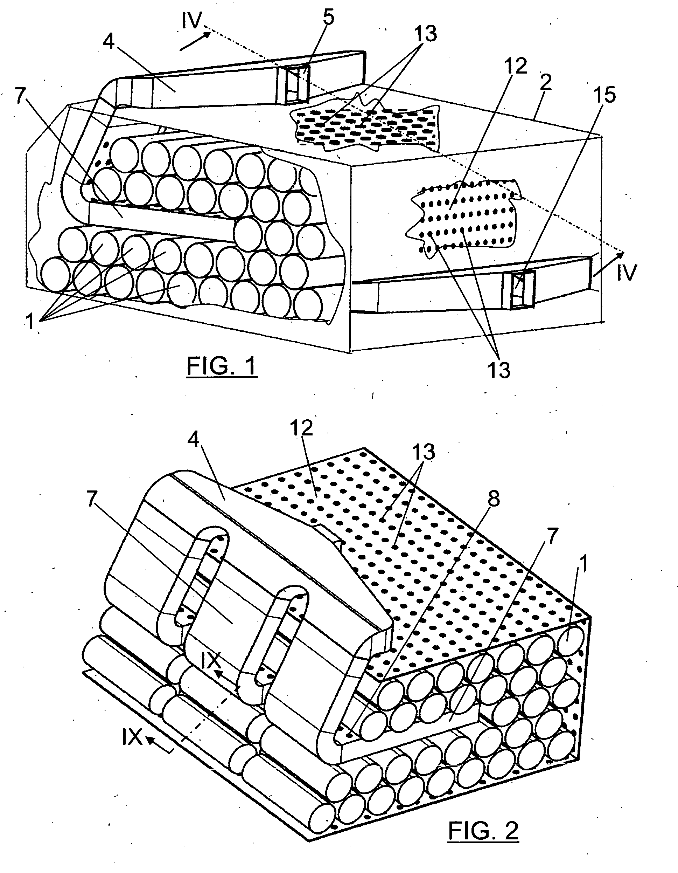

The electrical power-supply unit of the invention is of the type constituted by a set of stacked electrical batteries 1, contained in an external casing 2, Figure 1, and having cooling means.

The batteries 1 are placed in such a way that they form a stack to which the cooling means are attached, through which cooling air is injected into the interior of the stack 3 of batteries 1, from where it flows towards the exterior thereof.

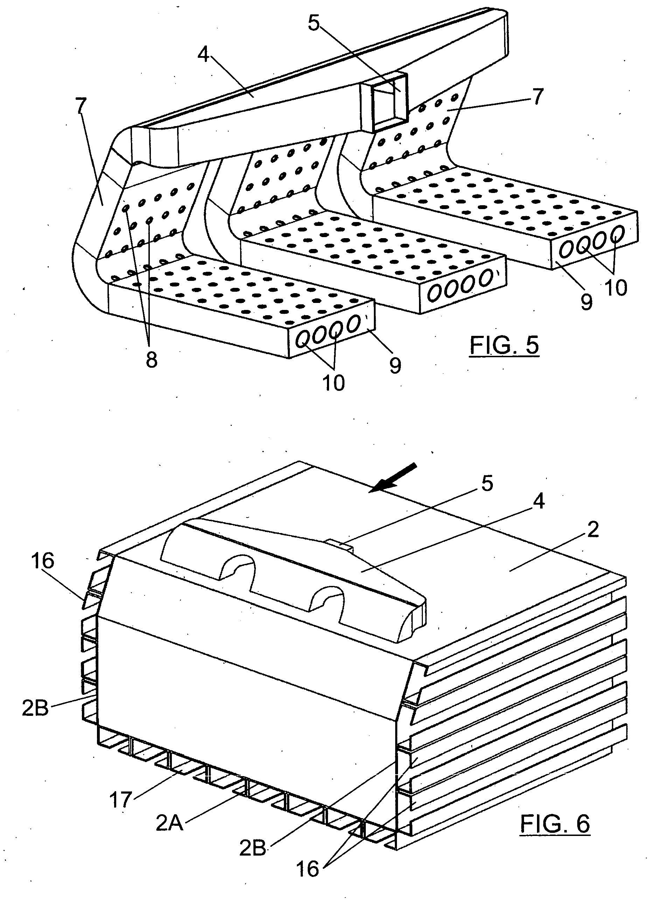

The cooling equipment is constituted, as it can be better seen in Figure 5, by a distribution chamber 4 which has a cold air inlet 5, for example coming from the vehicle compartment and supplied by an electric blower, and by a series of outlets 6, from each one of which a conduit 7 comes out running towards the interior of the stack 3 of batteries 1, as it may be seen for example in Figures 2, 4 and 5. The wall of these conduits 7 has perforations 8, at least in the sections and walls directed towards the set 3 of batteries 1. These conduits 7 may also be closed at their ends by means of a wall 9 having openings or outlet orifices 10, with a diameter larger than that of the orifices 8 on the conduit walls.

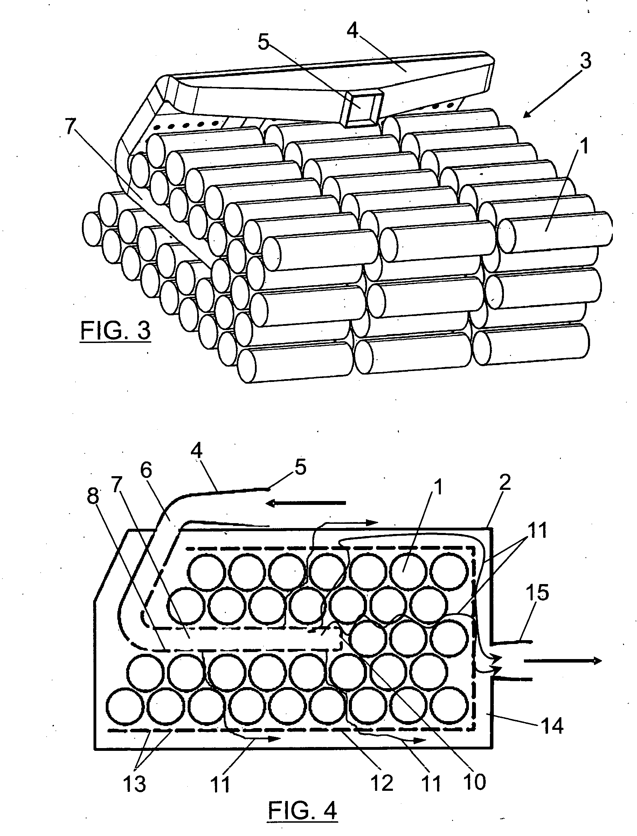

Figure 4 shows how the conduits 7 reach the center of stack 3 of batteries 1, in such a way that the air supplied through the inlet 5 of the distribution chamber 4 and the conduits 7 will flow from the interior of the stack 3 of batteries 1 towards the exterior thereof, as it is represented by the flow lines 11.

As it may be better seen in Figure 2, the stack 3 of batteries 1 is encircled by a wall 12 having perforations 13, between which and the casing 2 wall a hot air collecting chamber 14 is delimited, as shown in figure 4, leading to the exterior through the outlet 15 of the casing.

In this way the cold air supplied through the inlet 5 of the distribution chamber 4 and which may come from the vehicle compartment flows through the conduits 7 to go out through the orifices 8 of the lateral walls of said conduits and the orifices 10 of the wall 9 which closes the outlet section of said conduits 7. This cold air will circulate through the batteries 1 of the set of batteries, as represented in Figure 4 by lines 11, reaching the collecting chamber 14 through the orifices 13 of the wall 12, to finally go out through the outlet 15 of the casing 2.

Figures 2 and 3 show how the arrangement of the stack 3 of batteries 1 and the cooling means consisting of the distribution chamber 4 and the conduit 7, form a compact set which is finally enclosed by the casing 2, Figure 1, out of which there is only the distribution chamber 4 with its inlet 5, thus constituting a reduced volume set.

According to another characteristic of the invention, the casing 2 may externally have cooling fins 16 on its lower base 2A and cooling fins 17 on its vertical walls 2B, as shown in the figure 6.

Preferably the casing 2, with the set of electrical batteries 1 stacked inside it, will be placed behind the bedplate of the vehicle rear seat, with the lower base2A and the vertical walls 2B directed in a direction parallel to the longitudinal axis of the vehicle. With this arrangement the vertical walls 2B of the casing 2 will have longitudinal cooling fins 16 and the lower base 2A will externally have cooling fins 17 as well. The air current produced by the vehicle movement will flow through the fins 16, 17.

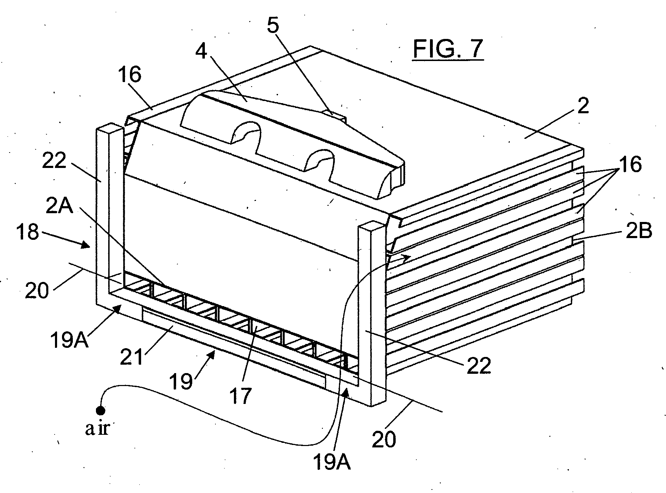

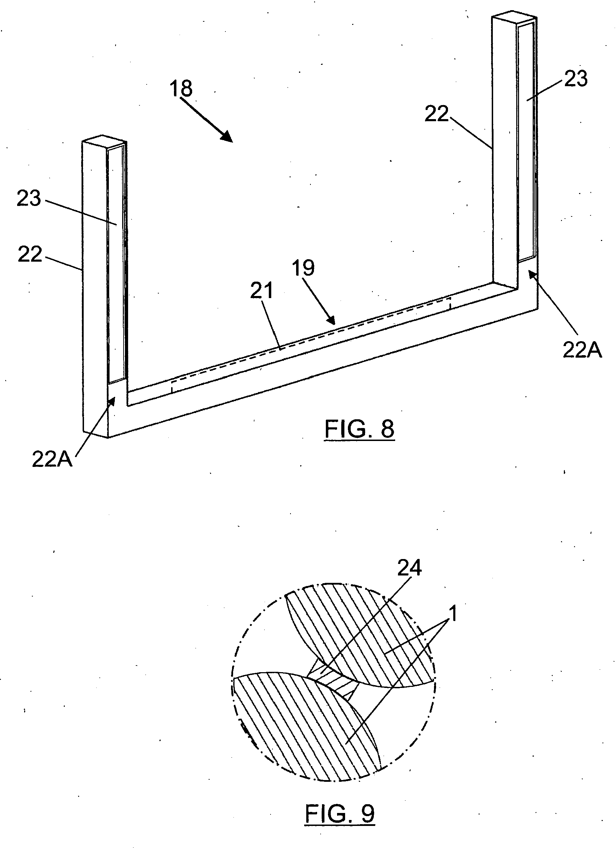

In order to increase this cooling air current through the fins 16, in front of the casing 2 there is a frontal air distributor 18, Figure 7, which may be constituted by a square or rectangular pipe, which describes a C-shaped path. The central section 19 of this C-shaped pipe runs horizontally under the vehicle floor level 20 and has on its wall 19A directed towards the vehicle running direction a longitudinal opening 21: This section 19 with the opening 21 defines a hot air collecting chamber into which the air current produced as a consequence of the vehicle movement will penetrate through the opening 21. The longitudinal fins 17 may be located between this central section 19 of the piping and the lower base 2A of the casing 2. The lateral sections 22 of the C-shaped pipe run in front of the cooling fins 16 of the vertical walls 2B and have openings 23, Figure 8, on the walls 22A facing said fins 16. Sections 22 are connected to the central section 21 and constitute other chambers supplying air to the fins 16. The set of the central section 19 and the lateral sections 22 of the C-shaped pipe thus form a frontal air distributor 18 which captures the air current produced by the effect of the vehicle movement and directs it towards the cooling fins 16.

The air flow which penetrates through the opening 21 of the central section 19 of the pipe reaches the lateral sections 22 from where it goes out through the openings 23 directed towards the fins 16.

Through the set comprising the cooling fins 16 and 17 and the frontal air distributor 18 described, a greater cooling effect of the stack 3 of batteries 1 contained in the casing 2 is achieved and all that is possible thanks to the elimination of heat produced by radiation, convection, and conductivity from the batteries 1.

Being the central section 19 of the piping 18 and the cooling fins 17 placed under the vehicle floor level 20, these components are exposed to the air current produced as a consequence of the vehicle movement.

As it can be seen in Figure 9, spacers 24 may be placed between the stacked batteries 1, in order to create the space between which the cooling air flow supplied by the cooling means described with reference to Figures 1 to 5 circulates.

## Claims

1. Electrical power-supply unit for the propulsion of automobiles, constituted by a set of stacked electrical batteries (1), contained in an external casing (2), having cooling means, wherein the aforementioned cooling means are constituted by a piece of equipment that injects cooling air into the interior of the stack (3) of batteries (1), from where it flows towards the exterior of said stack (3), for its evacuation; said equipment comprising a distribution chamber (4) placed outside the battery stack (3), which has a cooling air inlet (5) and a series of outlets (6) for said each of said outlets being connected to a corresponding air supply conduit (7) leading towards the interior of the stack (3); and further comprising, between the stack (3) of batteries (1) and the external casing (2), an intermediate wall (12) with perforations (13), which surrounds the stack (3) of batteries (1), wherein the intermediate wall (12) and said casing 2) delimit a hot air collecting chamber (14), leading to the exterior through an outlet (15) coming from the external casing (2), and said electrical power-supply unit
**characterized in that** the external casing (2) containing the stack (3) of electrical batteries (1) has on its exterior, at least on part of its walls (2A, 2B), cooling fins (16, 17) running in a direction parallel to the longitudinal axis of the vehicle; and **in that** in front of the casing (2) there is a frontal air distributor (18) comprising an air collecting chamber, downwardly protruding from the vehicle floor level (20) and is open on its wall (19A) directed towards the vehicle running direction, and an air supply chamber placed in front of the fins (16), which is connected to the collecting chamber and open on a wall (22A) facing said fins (16).

2. Electrical unit according to claim 1, **characterized in that** the casing (2) is placed behind the bedplate of the vehicle rear seat, with a lower base (2A) and vertical walls (2B) directed in a direction parallel to the vehicle longitudinal axis, having the vertical walls (2B) and the lower base (2A) cooling fins (16) and (17) respectively.

3. Electrical unit according to claim 2, **characterized in that** the frontal air distributor (18) consists of a piping that describes a capital letter C-shaped path, with straight sections (19, 22), wherein said sections (19, 22) comprise a central section (19) which runs horizontally under the vehicle floor level (20) and has a longitudinal opening (21) directed towards the vehicle running direction, constituting an air collecting chamber; and lateral sections (22) which run in front of the cooling fins (16) of the vertical walls (2B) and have openings (23) facing said fins (16), constituting other air supply chambers.

4. Electrical unit according to claims 2 and 3, **characterized in that** the cooling fins (17) of the lower base (2A) of the casing (2) are placed between the vehicle floor level (20) and the central section (19) of the capital letter C-shaped pipe.

## Patentansprüche

1. Elektrische Stromversorgungseinheit zum Antrieb von Automobilen, die durch eine Menge von gestapelten elektrischen Batterien (1), die in einem externen Gehäuse (2) enthalten sind, die Kühlmittel aufweisen, gebildet wird, wobei die besagten Kühlmittel durch ein Geräteelement gebildet werden, das Kühlluft in das Innere des Stapels (3) von Batterien (1) einleitet, von wo aus sie zu ihrem Abtransport in Richtung des Äußeren des Stapels (3) strömt; wobei die Gerätschaft Folgendes umfasst:
eine außerhalb des Batteriestapels (3) angeordnete Verteilungskammer (4), die einen Kühllufteinlass (5) und eine Reihe von Auslässen (6) dafür aufweist, wobei jeder der Auslässe mit einem entsprechenden Luftversorgungsdurchgang (7) verbunden ist, der in Richtung des Inneren des Stapels (3) führt; und ferner zwischen dem Stapel (3) von Batterien (1) und dem externen Gehäuse (2) eine Zwischenwand (12) mit Perforationen (13) umfasst, die den Stapel (3) von Batterien (1) umgibt, wobei die Zwischenwand (12) und das Gehäuse (2) eine Heißluft-Sammelkammer (14) abgrenzen, die durch einen Auslass (15), der von dem externen Gehäuse (2) kommt, nach außen führt, und die elektrische Stromversorgungseinheit **dadurch gekennzeichnet ist, dass** das externe Gehäuse (2), das den Stapel (3) von elektrischen Batterien (1) enthält, an seinem Äußeren mindestens auf einem Teil seiner Wände (2A, 2B) Kühlrippen (16, 17) aufweist, die in einer Richtung parallel zu der Längsachse des Fahrzeugs verlaufen; und dass sich vor dem Gehäuse (2) ein Front-Luftverteiler (18) befindet, mit einer Luftsammelkammer, die nach unten vom Fahrzeugbodenniveau (20) aus vorsteht und an ihrer Wand (19A), die zu der Fahrzeuglaufrichtung gerichtet ist, offen ist, und einer vor den Rippen (16) angeordneten Luftversorgungskammer, die mit der Sammelkammer verbunden und an einer den Rippen (16) zugewandten Wand (22A) offen ist.

2. Elektrische Einheit nach Anspruch 1, **dadurch gekennzeichnet, dass** das Gehäuse (2) hinter dem Unterteil des Fahrzeugrücksitzes angeordnet ist, mit einer unteren Basis (2A) und vertikalen Wänden (2B), die in einer Richtung parallel zur Fahrzeuglängsachse gerichtet sind, die die vertikalen Wände (2B) und die Kühlrippen (16) bzw. (17) der unteren Basis (2A) aufweisen.

3. Elektrische Einheit nach Anspruch 2, **dadurch gekennzeichnet, dass** der Front-Luftverteiler (18) aus einer Röhre besteht, die einen Pfad in der Form des Großbuchstaben C beschreibt, mit geraden Abschnitten (19, 22), wobei die Abschnitte (19, 22) einen Zentralabschnitt (19), der horizontal unter dem Fahrzeugbodenniveau (20) verläuft und eine Längsöffnung (21) aufweist, die in die Fahrzeuglaufrichtung gerichtet ist, der eine Luftsammelkammer darstellt; und laterale Abschnitte (22), die vor den Kühlrippen (16) der vertikalen Wände (2B) verlaufen und den Rippen (16) zugewandte Öffnungen (23) aufweisen, die andere Luftversorgungskammern darstellen, umfassen.

4. Elektrische Einheit nach Anspruch 2 und 3, **dadurch gekennzeichnet, dass** die Kühlrippen (17) der unteren Basis (2A) des Gehäuses (2) zwischen dem Fahrzeugbodenniveau (20) und dem Zentralabschnitt (19) des Rohrs der Form des Großbuchstaben C angeordnet sind.

## Revendications

1. Unité d'alimentation électrique pour la propulsion d'automobiles, constituée par un ensemble de batteries électriques empilées (1), contenue dans un boîtier externe (2), comportant des moyens de refroidissement, dans laquelle les moyens de refroidissement susmentionnés sont constitués par un élément de matériel qui injecte de l'air de refroidissement à l'intérieur de l'empilement (3) de batteries (1), l'air s'écoulant depuis l'intérieur vers l'extérieur dudit empilement (3), pour son évacuation ; ledit matériel comprenant une chambre de distribution (4) placée à l'extérieur de l'empilement de batteries (3), laquelle comporte une entrée d'air de refroidissement (5) et une série de sorties (6) pour chacune desdites sorties connectées à une conduite d'alimentation d'air correspondante (7) conduisant vers l'intérieur de l'empilement (3) ;
et comprenant en outre entre l'empilement (3) de batteries (1) et le boîtier externe (2) une paroi intermédiaire (12) présentant des perforations (13), laquelle entoure l'empilement (3) de batterie (1), dans laquelle la paroi intermédiaire (12) et ledit boîtier (2) délimitent une chambre de collecte d'air chaud (14), conduisant vers l'extérieur par le biais d'une sortie (15) provenant du boîtier externe (2), et ladite unité d'alimentation électrique étant **caractérisée en ce que** le boîtier externe (2) contenant l'empilement (3) de batteries électriques (1) présente sur son extérieur, au moins sur une partie de ses parois (2A, 2B), des ailettes de refroidissement (16, 17) s'étendant parallèlement à l'axe longitudinal du véhicule ; et **en ce que** devant le boîtier (2) se trouve un distributeur d'air frontal (18) comprenant une chambre de collecte d'air, saillant vers le bas depuis le niveau du plancher du véhicule (20) et ouverte sur sa paroi (19A) dirigée vers le sens de marche du véhicule, et une chambre d'alimentation d'air placée devant les ailettes (16), laquelle est connectée à la chambre de collecte et ouverte sur une paroi (22A) faisant face auxdites ailettes (16).

2. Unité électrique selon la revendication 1, **caractérisée en ce que** le boîtier (2) est placé derrière la plaque d'assise du siège arrière du véhicule, avec une base inférieure (2A) et des parois verticales (2B) dirigées parallèlement à l'axe longitudinal du véhicule, les parois verticales (2B) et de la base inférieure (2A) portant respectivement des ailettes de refroidissement (16) et (17).

3. Unité électrique selon la revendication 2, **caractérisée en ce que** le distributeur d'air frontale (18) consiste en une tuyauterie qui décrit un chemin en forme de C, avec des sections droites (19, 22), dans laquelle lesdites sections (19, 22) comprennent une section centrale (19) qui passe horizontalement sous le niveau du plancher du véhicule (20) et comporte une ouverture longitudinale (21) dirigée vers le sens de marche du véhicule, constituant une chambre de collecte d'air ; et des sections latérales (22) qui passent devant les ailettes de refroidissement (16) des parois verticales (2B) et comportent des ouvertures (23) faisant face auxdites ailettes (16), constituant d'autres chambres d'alimentation d'air.

4. Unité électrique selon les revendications 2 et 3, **caractérisée en ce que** les ailettes de refroidissement (17) de la base inférieure (2A) du boîtier (2) sont placées entre le niveau du plancher du véhicule (20) et la section centrale (19) du tuyau en forme de C.
